# FASCICULE DE BREVET EUROPEEN

(11) **EP 2 003 382 B1**
(45) Date de publication et mention de la délivrance du brevet: **17.08.2011**
(21) Numéro de dépôt: 08157891.6
(22) Date de dépôt: 09.06.2008
(51) Int. Cl.: F16K 35/06

(54) **Dispositif de verrouillage ou d'interverrouillage de sécurité pour vanne de canalisation**
Vorrichtung zur Verriegelung oder Sicherheitsblockierung für Kanalisierungsschieber
Safety locking or interlocking device for line valve

(30) Priorité: 13.06.2007 FR 0704195
(43) Date de publication de la demande: 17.12.2008
(73) Titulaire: Securite Machines Systemes, 93360 Neuilly Plaisance (FR)
(72) Inventeur: Laigle, Thierry, 93360, Neuilly Plaisance (FR)
(74) Mandataire: Pontet, Bernard

(56) Documents cités:
- EP-A- 1 380 783
- WO-A-97/19285
- GB-A- 2 230 075
- GB-A- 2 292 207
- US-A1- 2005 092 367

## Description

La présente invention concerne un dispositif de verrouillage ou d'interverrouillage, destiné à la sécurité des vannes ou robinets de canalisations.

Elle concerne en outre un procédé de démontage total ou partiel d'un tel dispositif de verrouillage.

L'invention concerne le domaine des dispositifs de sécurité implantés ou intégrés à des vannes ou robinets, et conçus pour limiter le risque de manoeuvres inopportunes.

Dans de nombreuses installations ou usines manipulant des fluides, des procédures très précises régissent les manoeuvres de certaines vannes pour des raisons de sécurité. Il s'agit par exemple d'éviter que certains fluides ne risquent de se mélanger, ou de conserver en permanence au moins un circuit de décharge de pression qui soit opérationnel.

Pour assurer le respect de ces procédures, ces vannes sont munies d'un dispositif de verrouillage destiné à empêcher une manoeuvre inopportune, par exemple pour des raisons de distraction ou de trop grande hâte ou à cause d'erreurs humaines.

Différents types de dispositifs de verrouillage sont utilisés, selon les procédures appliquées ou selon les choix technologiques. Un tel dispositif de verrouillage peut en particulier comporter un ou plusieurs mécanismes de verrouillage, à commande mécanique ou électrique, et interagissant de différentes façon, voir par exemple WO 97/19285.

La présente description porte sur des dispositifs du type à deux mécanismes mécaniques avec chacun une clé, fonctionnant selon le principe de l'interverrouillage utilisé par exemple en France et en Angleterre.

Le principe de l'interverrouillage est basé sur la présence de deux mécanismes à clé au sein d'un dispositif appelé serrure. Ces deux mécanismes interagissent de façon à ce que :
- la manoeuvre n'est possible que lorsque les deux clés sont présentes dans la serrure,
- l'une des clés ne peut être retirée que lorsque la vanne est dans une position ouverte, et
- l'autre clé ne peut être retirée que lorsque la vanne est dans une position fermée.

L'invention peut toutefois être applicable à des dispositifs organisés selon d'autres normes, par exemple avec un nombre différent de mécanismes ou avec des mécanismes à commande électrique ou mixte.

Un tel dispositif de verrouillage comprend en général une pièce de manoeuvre, par exemple un volant ou un levier monté sur un tube, dont la rotation est verrouillée ou non par les mécanismes de verrouillage. Cette pièce de manoeuvre entraîne l'arbre de manoeuvre par une forme telle qu'un carré, ou des encoches radiales, ou des cannelures axiales.

Lorsque le dispositif de verrouillage est fourni séparément ou monté ultérieurement, cette pièce de manoeuvre est fixée ou accouplée à un arbre de manoeuvre dépassant de la vanne. Cette fixation se fait souvent par l'intermédiaire d'un adaptateur, qui permet d'utiliser un même modèle de dispositif de verrouillage pour différents types de vannes.

Le montage et le démontage de cette pièce de manoeuvre, ou de la totalité du dispositif de verrouillage, est souvent long ou complexe et nécessite souvent une ou plusieurs manoeuvres de la vanne. Par exemple, dans les dispositifs proposés par la société Netherlocks (marque déposée), la pièce de manoeuvre est fixée à l'adaptateur par plusieurs quatre vis radiales auxquelles on accède à travers un trou dans le boîtier de la serrure, en tournant l'arbre pour passer d'une vis à l'autre. D'autres dispositifs existant utilisent plusieurs vis longitudinales réparties en couronne autour de l'axe de manoeuvre, et dont l'accès est souvent gêné par le levier de manoeuvre ou les branches du volant.

Or, lorsqu'une opération de maintenance ou de modification doit être réalisée sur la vanne portant un tel dispositif, il est donc nécessaire de déclencher l'ensemble de la procédure de déverrouillage, alors que cette vanne est en principe déjà isolée du reste de l'installation. Par exemple pour de l'interverrouillage à deux clés, il faut avoir les deux clés à disposition alors que l'une d'entre se trouve normalement en salle de contrôle. Il s'agit alors d'une contrainte inutile venant en plus de la procédure qui a permis d'isoler la vanne en question, et donc une source de coût et de perte de temps.

Plus encore, lorsqu'une ou plusieurs vannes portant un tel dispositif doivent être révisées, au moins tous les cinq ans pour nombres d'installations, elles sont en général séparées complètement du circuit de fluide pour être envoyées en atelier.

Si les dispositifs de verrouillage n'ont pas été démontés auparavant, par exemple pour un gain de temps les vannes arrivent à l'atelier à l'état verrouillé et le personnel ne dispose en général pas des deuxième clés permettant le déverrouillage. Pour éviter les pertes de temps, il est alors courant de détruire le dispositif de verrouillage pour effectuer la révision des vannes. Ces dispositifs de verrouillage et leurs clés doivent donc être remplacés avant la remise en route, ce qui augmente en outre les risques d'erreur et constitue une perte de temps et un coût supplémentaires.

De plus, il peut être utile de pouvoir démonter la pièce de manoeuvre sans démonter la serrure, ou de démonter partiellement la serrure, par exemple pour vérifier ou entretenir ses mécanismes, ou pour vérifier ou ajuster le champs du verrouillage.

Un but de l'invention est de pallier les inconvénients des dispositifs connus, et en particulier :
- de permettre ou simplifier le montage ou le démontage de l'élément de manoeuvre et de la serrure ;
- de permettre ou de simplifier le montage ou le démontage de l'élément de manoeuvre sans démontage de la serrure, ou avec un démontage partiel de la serrure ;
- permettre ou simplifier un tel montage ou démontage sans nécessiter la manoeuvre de la vanne ou le déverrouillage du dispositif de verrouillage ;
- minimiser les coûts et la complexité de fabrication ainsi que l'encombrement du dispositif une fois monté, tout en gardant une bonne robustesse.

Pour cela, l'invention propose un dispositif de verrouillage de sécurité pour une vanne de canalisation comprenant un corps et un arbre de manoeuvre commandant ladite vanne. L'invention s'applique à un tel dispositif comprenant :
- des moyens d'accouplement en rotation dudit arbre de manoeuvre avec un élément de manoeuvre pouvant recevoir une pièce de manoeuvre, et
- une serrure accouplée en rotation avec le corps de la vanne et comprenant au moins un mécanisme de verrouillage apte à interdire ou limiter la rotation dudit élément de manoeuvre.

Selon l'invention, ledit dispositif de verrouillage comprend au moins un élément dit verrou dont un déplacement depuis une position fonctionnelle vers une position hors fonction permet de désaccoupler l'élément de manoeuvre d'avec l'arbre de manoeuvre sans nécessiter de rotation dudit arbre de manoeuvre, et sans désaccoupler la pièce de manoeuvre de l'élément de manoeuvre.

L'invention permet ainsi de séparer facilement le dispositif de verrouillage et la vanne en cas de besoin. Il devient donc possible de démonter, d'entretenir ou de régler les dispositifs de verrouillage, sans utiliser la procédure de déverrouillage et donc sans affecter la production, puisque la vanne n'a pas besoin d'être manoeuvrée au cours de l'opération, et ne peut pas l'être facilement sans remontage du dispositif de verrouillage.

De plus, lorsque l'on retire le dispositif de verrouillage, on retire aussi la chaîne cinématique de manoeuvre de la vanne. La vanne n'est donc plus manoeuvrable telle quelle, et la sécurité recherchée à travers le dispositif de verrouillage n'en est donc pas compromise.

Plus particulièrement, l'invention s'applique à un tel dispositif de verrouillage comprenant au moins deux mécanismes de verrouillage mécaniques à clé, interagissant entre eux pour réaliser une fonction d'interverrouillage entre au moins deux positions de l'arbre de manoeuvre.
caractérisé en ce que l'élément de manoeuvre et l'arbre de manoeuvre sont réunis en translation par la présence de l'élément verrou, et sont accouplés en rotation par coopération de formes autorisant entre eux une translation parallèle à leur axe de rotation

L'invention peut s'appliquer à un tel dispositif de verrouillage dont la serrure comporte des moyens d'ancrage au corps de vanne qui sont agencés pour pouvoir être démontés sans nécessiter de rotation de l'arbre de manoeuvre, le déplacement du verrou en position hors fonction permettant alors de séparer la serrure du corps de vanne.

Des brides connues, de forme fixe ou variable, lorsqu'elles sont fixées ou ajustées par l'extérieur, permettent ainsi de profiter des avantages de l'invention.

De façon avantageuse, l'élément de manoeuvre est réuni en translation avec l'arbre de manoeuvre par l'intermédiaire de la serrure. Le dispositif de verrouillage comprend des moyens d'ancrage qui sont commandés ensembles par l'élément verrou, et réalisent, selon l'axe dudit arbre de manoeuvre:
- un ancrage en translation de la serrure avec l'arbre de manoeuvre, et
- un ancrage en rotation de la serrure avec le corps de vanne.

La séparation du dispositif de verrouillage d'avec le corps de vanne en est donc facilitée, et il devient possible de se passer des brides vissées habituellement utilisées qui sont longues et délicates à mettre en place, à positionner et à serrer.

Pour plus de simplicité dans le montage et démontage, l'invention prévoit que moyens d'ancrage en rotation de la serrure par rapport au corps de vanne comprennent un élément d'ancrage entourant l'arbre de manoeuvre et reliant en rotation la serrure au corps de vanne par coopération de formes.

Ces formes d'ancrage sont agencées de façon ce que leur désengagement nécessite un éloignement de ladite serrure devant être autorisé par l'élément verrou.

Le montage et démontage sont facilités, mais le dispositif de verrouillage ne peut pas tourner, et donc conserve son rôle de sécurité, tant que le verrou est présent.

Dans un mode de réalisation avantageux, la serrure comprend un boîtier traversé par un tunnel entourant l'arbre de manoeuvre ou l'élément de manoeuvre ou les deux. Ce tunnel peut être pénétré par une partie d'au moins un mécanisme de verrouillage, ladite partie formant alors un pêne interagissant avec l'arbre de manoeuvre ou l'élément de manoeuvre pour en interdire ou en limiter la rotation.

L'élément verrou comprend au moins une partie coulissant transversalement par rapport à l'axe du tunnel pour s'engager dans des fentes ou évidements portés d'une part par la serrure et d'autre part par l'arbre de manoeuvre.

Dans une variante non exclusive, le verrou réunit en translation la serrure et l'arbre de manoeuvre.

L'élément verrou peut par exemple comprendre une pièce formant une fourchette venant s'insérer dans la serrure, de part et d'autre de l'axe du tunnel, en s'engageant dans des fentes transversales portées par ledit tunnel et dans une rainure annulaire partielle ou totale portée par l'arbre de manoeuvre, réunissant ainsi en translation la serrure avec l'arbre de manoeuvre.

Avantageusement, l'arbre de manoeuvre porte un élément dit adaptateur, fixé à son extrémité et coopérant avec l'élément verrou pour réunir en translation l'arbre de manoeuvre avec le dispositif de verrouillage.

Cet adaptateur étant fixé à l'arbre, il peut être vu comme faisant partie de l'arbre de manoeuvre. Certaines particularités de l'invention s'appliquant à l'arbre peuvent ainsi s'appliquer à l'adaptateur aussi bien qu'à l'arbre proprement dit. Ainsi, dans le mode de réalisation préféré décrit plus loin, c'est cet adaptateur qui coopère avec la serrure pour ancrer celle-ci en translation sur l'arbre de manoeuvre.

En utilisant différents modèles d'adaptateurs, il est facilement possible d'adapter un même dispositif de verrouillage à plusieurs formes ou dimensions d'arbres de manoeuvre.

Par ailleurs, les adaptateurs sont des pièces qui représentent souvent une épaisseur importante, souvent plus de 10mm voire 30mm, et sont souvent fabriquées à la demande du fait de la grande diversité des types de vannes. Or la fabrication en très petite série d'une pièce assez massive dans un matériau résistant comme de l'acier représente un travail assez long et coûteux, souvent réalisé en électroérosion.

L'invention propose aussi de réaliser un adaptateur par une superposition de plaquettes minces découpées à la forme de la section de la pièce finale et empilées entre elles. Ces plaquettes peuvent avoir par exemple entre 1mm et 5mm, voir 10mm, ce qui permet une fabrication souple par des procédés plus intéressants, par exemple de l'usinage numérique par outil ou de la découpe au laser ou au jet d'eau.

L'invention propose aussi un procédé de montage ou de démontage d'un tel dispositif de verrouillage ou d'interverrouillage.

Dans le cas d'un montage avec élément d'ancrage, le procédé comprend en particulier les étapes de :
- montage de élément d'ancrage autour de l'arbre de manoeuvre et engagement de ses formes d'ancrage avec celles du corps de vanne ;
- montage de la serrure sur l'arbre de manoeuvre, comprenant un accouplement de l'élément de manoeuvre avec l'arbre de manoeuvre et un engagement des formes d'ancrage de la serrure avec celles de l'élément d'ancrage ;
- déplacement de l'élément verrou d'une position hors fonction à une position fonctionnelle, accouplant ainsi en translation l'élément de manoeuvre avec l'arbre de manoeuvre, et la serrure le corps de vanne.

L'invention propose aussi un procédé de démontage d'un tel dispositif de verrouillage ou d'interverrouillage, comprenant les étapes de :
- déplacement de l'élément verrou de la position fonctionnelle à une position hors fonction, désaccouplant ainsi l'élément de manoeuvre ou la serrure d'avec l'arbre de manoeuvre ;
- désaccouplement en rotation de l'élément de manoeuvre d'avec l'arbre de manoeuvre par séparation de l'élément de manoeuvre ou la serrure d'avec l'arbre de manoeuvre.

Selon l'invention, le procédé de démontage comprend plus particulièrement les étapes de :
- déplacement de l'élément verrou de la position fonctionnelle à une position hors fonction, désaccouplant ainsi l'élément de manoeuvre ou la serrure d'avec l'arbre de manoeuvre ;
- désaccouplement en rotation de l'élément de manoeuvre d'avec l'arbre de manoeuvre par séparation de l'élément de manoeuvre ou la serrure d'avec l'arbre de manoeuvre.

Dans le cas où la serrure est montée sur un élément d'ancrage, le procédé permet de plus d'éviter d'avoir à desserrer et démonter des brides en plus du verrou.

D'autres particularités et avantages de l'invention ressortiront de la description détaillée d'un mode de mise en oeuvre nullement limitatif, et des dessins annexés sur lesquels :
- la FIGURE 1 illustre une vanne de canalisation dotée d'un dispositif de verrouillage ;
- les FIGURE 2 à FIGURE 4 représentent un premier mode de réalisation de l'invention, de type interverrouillage et comprenant un adaptateur :
   o la FIGURE 2 est une vue en éclaté ;
   o la FIGURE 3 est une vue de face ;
   o la FIGURE 4 est une vue de gauche;
   o la FIGURE 5 est une vue de dessus de la serrure, sans couvercle ni mécanisme interne de verrouillage ;
- les FIGURE 6 à FIGURE 9 représentent un montage et démontage d'un dispositif de verrouillage selon le premier mode de réalisation de l'invention :

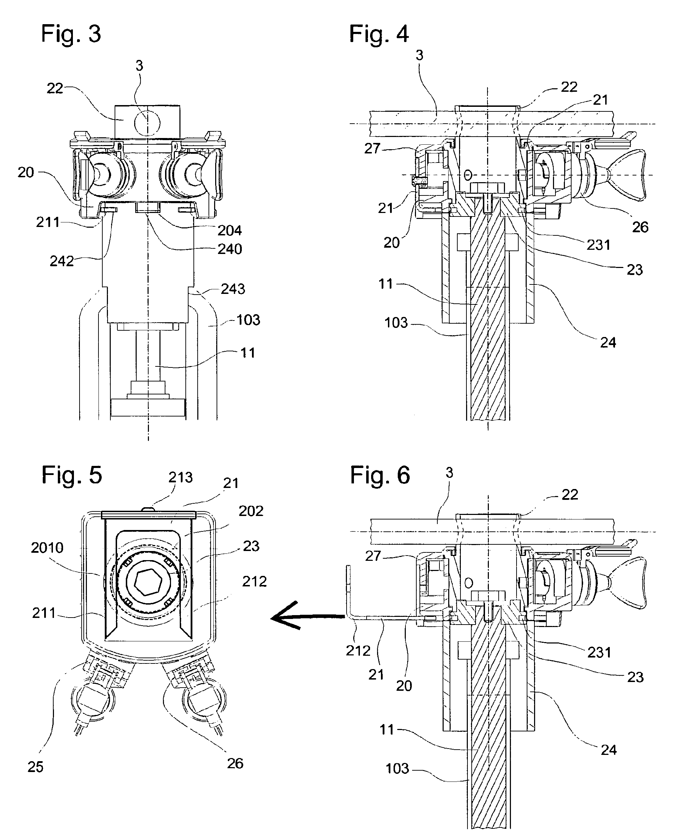

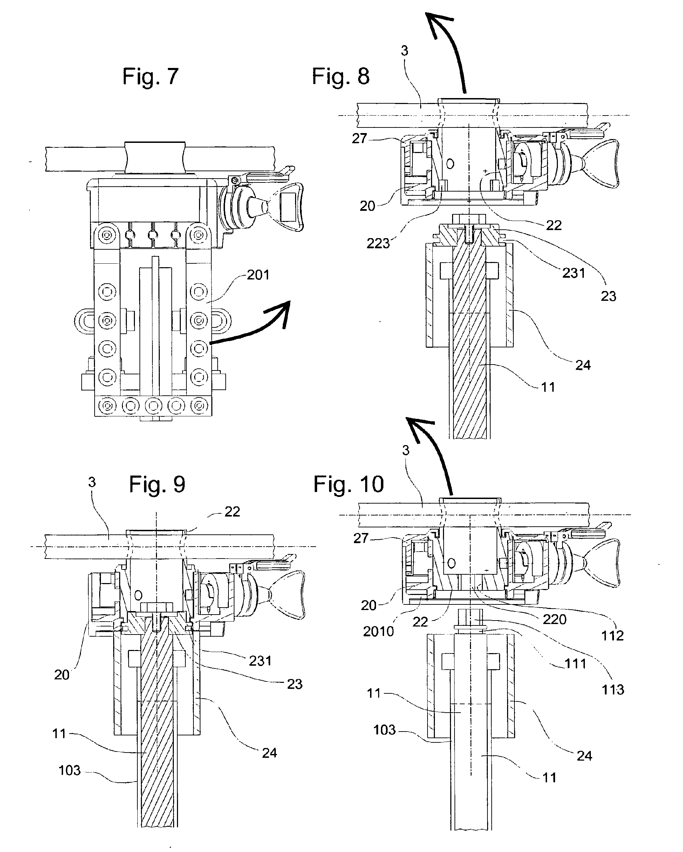

o FIGURE 6 : extraction du verrou ;
o FIGURE 7 : démontage des brides ;
o FIGURE 8: séparation du boîtier et du moyeu d'avec l'adaptateur ;
o FIGURE 9 : serrure partiellement démontée ;
   - la FIGURE 10 représente un autre mode de réalisation de l'invention, sans adaptateur.

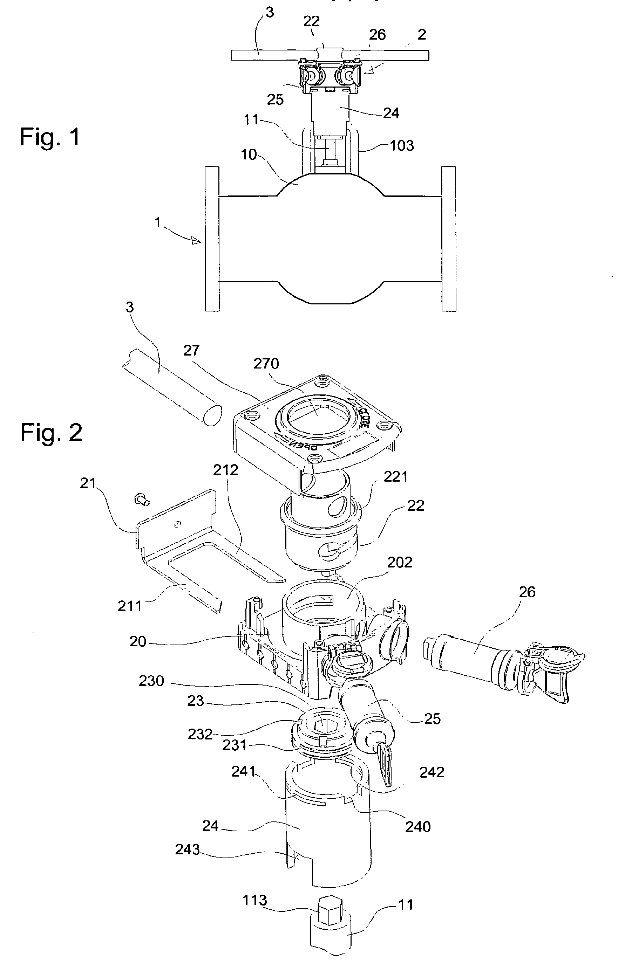

La FIGURE 1 représente une vanne 1 de canalisation de type quart de tour dotée d'un dispositif de verrouillage 2 selon l'invention verrouillant l'utilisation d'une pièce de manoeuvre, ici un levier de manoeuvre 3, pour commander un arbre de manoeuvre 11 actionnant l'ouverture ou la fermeture de la vanne 1.

Selon les applications, la pièce de manoeuvre peut être différente, par exemple un levier ou une came, ou un actionneur motorisé. De même, l'arbre de manoeuvre peut prendre différentes formes selon le type de vanne.

Pour les vannes à levier quart de tour, telles que représentée ici, le corps de vanne présente en général une platine aux normes ISO. Mais le dispositif de verrouillage ici décrit peut être adapté à d'autres formes de platines ou de corps de vanne sans sortir du cadre de l'invention.

Le dispositif de verrouillage 2 est accouplé en rotation par des moyens d'ancrage, par exemple des brides 201 ou un tube d'ancrage 24, avec le corps 10 de la vanne 1.

Les FIGURE 2 à FIGURE 5 représentent la structure de ce dispositif de verrouillage 2 de façon plus visible.

Cette structure comprend des moyens d'accouplement entre l'arbre de manoeuvre 11 et un élément de manoeuvre 2 aussi appelé moyeu, sur lequel est solidarisé le levier de manoeuvre 3.

Le dispositif de verrouillage 2 selon l'invention comprend au moins un élément 21 dit verrou, dont un déplacement depuis une position fonctionnelle (FIGURE 4) vers une position hors fonction (FIGURE 6) permet de désaccoupler l'élément de manoeuvre 22 de l'arbre de manoeuvre 11 sans nécessiter de rotation dudit arbre de manoeuvre.

Ce dispositif de verrouillage 2 comprend aussi une serrure destinée à être fixée au corps 10 de la vanne 1. Dans le mode de réalisation ici décrit pour de l'interverrouillage, cette serrure comprend deux mécanismes de verrouillage 25 et 26 agencés pour pouvoir interdire ou limiter la rotation de l'élément de manoeuvre 22.

Selon la longueur de l'arbre de manoeuvre, les mécanismes de verrouillage peuvent aussi être agencés de façon à agir directement sur l'arbre de manoeuvre, ou sur la pièce de manoeuvre, ou sur tout autre élément de la chaîne cinématique commandant cet arbre de manoeuvre.

Dans ce premier mode de réalisation de l'invention, la serrure 20 comprend un boîtier traversé par un tunnel 202 entourant l'élément de manoeuvre 22. Ce tunnel 202 peut être pénétré par une partie de chacun des mécanismes de verrouillage 25 et 26, cette partie formant alors un pêne interagissant avec l'élément de manoeuvre 22 pour en interdire ou en limiter la rotation.

L'élément verrou comprend au moins une partie 211, 212 coulissant transversalement par rapport à l'axe du tunnel 202 pour s'engager dans des fentes ou évidements portés d'une part par le boîtier de la serrure 20 et d'autre part par l'arbre de manoeuvre 11.

Dans ce premier mode de réalisation, l'accouplement en rotation entre l'arbre de manoeuvre 11 et l'élément de manoeuvre 22 se fait par l'intermédiaire d'un élément 23 dit adaptateur. Cet adaptateur 23 est fixé à l'extrémité de l'arbre de manoeuvre et coopère avec l'élément verrou 21 pour réunir en translation l'arbre de manoeuvre 11 avec l'élément de manoeuvre 22.

Cet adaptateur 23 peut être fixé au préalable par un écrou ou une vis 114 sur l'extrémité de l'arbre de manoeuvre 11, et peut donc être vu comme faisant partie de cet arbre 11.

L'adaptateur est accouplé en rotation avec l'arbre de manoeuvre par une ouverture 230 d'une forme, par exemple carrée ou hexagonale, complémentaire de celle 113 de l'arbre de manoeuvre 11.

Lorsque la serrure est montée sur la vanne, cet adaptateur 23 est accouplé en rotation avec le moyeu 22 par coopération de formes, par exemple par des encoches 232 recevant des ergots 223 portés par le dessous du moyeu 22.

Dans ce mode de réalisation, l'élément verrou 21 comprend une plaque formant une fourchette 211, 212 venant s'insérer dans la serrure, de part et d'autre de l'axe du tunnel 202. Lorsqu'elle est insérée en position fonctionnelle, les dents 211 et 212 de cette fourchette s'engagent sur leur partie extérieure dans des fentes transversales 203, 204 portées par ledit tunnel, et s'engagent sur la partie intérieure dans une rainure annulaire 231 partielle ou totale portée par l'élément adaptateur 23, réunissant ainsi en translation le boîtier 20 de la serrure avec l'adaptateur 23 et donc avec l'arbre de manoeuvre 11.

A sa base, cette fourchette présente une partie en forme de plaquette repliée à 90° vers le haut du boîtier 20. En usage normal, cette plaquette est fixée audit boîtier par une vis de façon à retenir la fourchette en position verrouillée, et présente une surface visible permettant de vérifier facilement la présence du verrou ainsi que d'afficher des informations. Cette plaquette peut être fixée sur le boîtier de serrure 20 par une simple vis ou de façon plus sécurisée.

L'élément de manoeuvre 22 porte un épaulement 221 coopérant avec les bords d'une ouverture circulaire 270 dans le couvercle 27 du boîtier 20 de la serrure pour retenir ledit élément de manoeuvre 22 dans le tunnel 202 du boîtier 20 de la serrure.

La serrure étant réunie en translation avec l'arbre de manoeuvre 11 grâce au verrou 21, l'élément de manoeuvre 22 l'est donc aussi tant que le couvercle 270 est fixé sur le boîtier 20.

Le boîtier 20 de serrure comporte sur ses flancs des moyens de fixations connus, tels que des trous filetés 2010 ou des rainures en « T » permettant la fixation sur le corps de vanne par des brides 201.

Ce tube d'ancrage 24 porte pour cela des créneaux 243 qui sont positionnés à cheval sur les bras du portique 103 faisant partie du corps 10 de vanne et maintenant l'arbre de manoeuvre 11.

Le dispositif de verrouillage 2 peut aussi être relié au corps 10 de la vanne 1 par un tube d'ancrage 24 entourant l'arbre de manoeuvre 11 ou l'élément de manoeuvre 22 et maintenu en rotation sur le corps 10 de vanne.Ce tube d'ancrage 24 porte pour cela des créneaux 243 qui sont positionnés à cheval sur les bras du portique 103, faisant partie du corps 10 de vanne et maintenant l'arbre de manoeuvre 11.

Ce tube d'ancrage 24 s'engage dans la base du tunnel 202 du boîtier 20 de la serrure, et y est maintenu en rotation par coopération de formes, entre des créneaux 240 portés par son bord supérieur et des ergots 204 dépassant sous ledit boîtier de serrure 20.

Ce tube 24 présente deux fentes transversales 241 et 242, en regard de celles 203 , 204 du tunnel 202, et dans lesquelles s'engagent les dents 211, 212 du de la fourchette 21 de verrouillage.

Les FIGURE 6 à FIGURE 9 représentent un démontage d'un dispositif de verrouillage selon le premier mode de réalisation de l'invention.

En FIGURE 6, le verrou 21 est déplacé en position hors fonction. Les dents 211 et 212 de la fourchette 21 sont désengagées. Elles ont libéré l'adaptateur 23 de la serrure, et le tube d'ancrage 24 de la base du boîtier 20 de la serrure.

En FIGURE 7, dans le cas où elles sont présentes, les brides 201 fixant le boîtier 20 de serrure au corps de vanne sont démontées.

En FIGURE 8, l'ensemble de la serrure et du moyeu 22 peut être séparé du corps 10 de vanne et du tube d'ancrage 24, sans avoir besoin de démonter le levier de manoeuvre 3 du moyeu 22.

Le montage se fait dans l'ordre inverse, soient FIGURE 8, puis FIGURE 6 dans le cas d'un montage avec simple tube d'ancrage 24.

En FIGURE 9, le levier 3 et le couvercle 27 ont été démontés du boîtier 20 de serrure, directement ou après extraction de l'ensemble puis remontage de la serrure sans couvercle. Il est possible d'accéder à l'intérieur de la serrure et aux barillets 25, 26 formant les mécanismes de verrouillage ainsi qu'aux divers organes les faisant interagir entre eux.

L'invention permet ainsi de démonter partiellement le dispositif de verrouillage sans manoeuvrer la vanne, par exemple pour des opérations de maintenance ou de réglage.

En effet, sans avoir recours à la procédure de déverrouillage, l'invention permet de séparer facilement la serrure d'avec le corps de vanne et de remonter le dispositif partiellement démonté avec le volant de manoeuvre, par exemple après avoir retiré le couvercle 270 du boîtier 20 de la serrure. Ne nécessitant pas de déverrouillage, cette opération peut donc être réalisée sans perturber la production.

En FIGURE 10 est représentée une alternative, dans laquelle l'arbre de manoeuvre 11 ne porte pas d'adaptateur, et est lui-même directement accouplé à la serrure en translation, et au moyeu 22 en rotation.

Dans ce mode de réalisation, le moyeu présente alors une forme intérieure 220 coopérant avec une forme extérieure 112 complémentaire de l'arbre de manoeuvre 11, ou inversement.

Cette alternative peut aussi être mise en oeuvre avec un moyeu comprenant une partie rapportée, servant d'adaptateur pour l'accouplement en rotation, mais qui est fixée au moyeu plutôt qu'à l'arbre de manoeuvre.

L'élément verrou 21 comprend alors une plaque formant une fourchette venant s'insérer dans la serrure 20, de part et d'autre de l'axe du tunnel 202. Lorsqu'elle elle est insérée en position fonctionnelle, les dents 211, 212 de cette fourchette s'engagent sur leur partie extérieure dans des fentes 2010 transversales portées par ledit tunnel, et sur leur partie intérieure dans une rainure annulaire 111 partielle ou totale portée par l'arbre de manoeuvre 11, réunissant ainsi en translation l'arbre de manoeuvre avec le boîtier de la serrure, et donc avec le dispositif de verrouillage.

L'invention s'applique aussi aux vannes de type multi tours, par exemple à volant. Selon le type de vanne multi tours, la pièce ici appelée « arbre de manoeuvre 11 » peut présenter différentes formes sans sortir du cadre de l'invention.

Par exemple pour une vanne à réducteur, il s'agira de l'arbre du réducteur sur lequel est normalement monté le volant de manoeuvre.

Lorsque la vanne comporte une noix qui tourne sur elle-même pour faire monter ou descendre une tige, c'est cette noix qui sera concernée par l'appellation d'arbre de manoeuvre, en ce qui concerne la présente description.

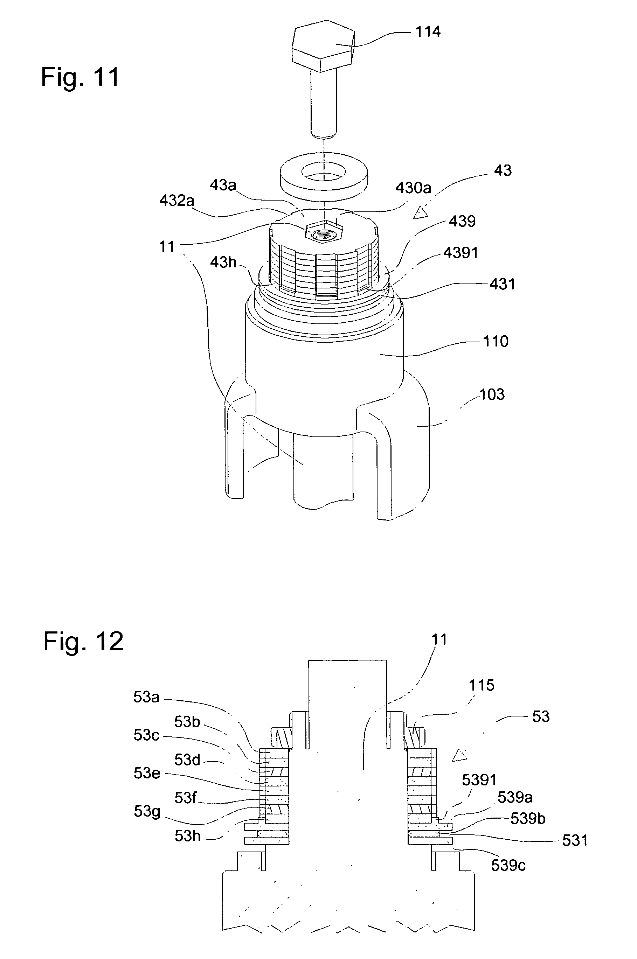

Les FIGURE 11 et FIGURE 12 représentent un adaptateur 43, 53 selon l'invention, réalisé par empilement de plaquettes 43a à 43h, 53a à 53h. Ces plaquettes 43a à 43h présentent :
- sur leur périphérie extérieure un profil 432a, dont l'assemblage constitue une forme coopérant avec la forme intérieure 223 du moyeu 22 pour obtenir un accouplement en rotation ; et
- en leur partie centrale une découpe selon une forme 430a, dont l'assemblage réalise une forme coopérant avec la forme extérieure 113 de l'arbre de manoeuvre 11.

Cet empilement est posé sur une pièce de retenue 439 prévue avec une forme agencée pour réaliser un accouplement en translation de la serrure avec l'arbre de manoeuvre en coopérant avec le verrou 21 et les rainures 2010 du boîtier 20, par exemple par une rainure circulaire 431 sur sa surface extérieure. Cette forme 531 d'ancrage en translation peut aussi être obtenue par une combinaison de plusieurs plaquettes de géométries différentes, par exemple deux plaquettes 539a, 539c de plus grand diamètre extérieur empilées de part et d'autre d'au moins une autre plaquette 539b de plus petit diamètre extérieur. La combinaison de ces plaquettes réalise ainsi une rainure 531 sur l'épaisseur de la ou les plaquettes de plus petit diamètre.

La pièce de retenue 439, 539a à 539c est réalisée dans une géométrie déterminée pour coopérer avec le moyeu 22, tout en ayant en son centre une ouverture suffisamment grande pour accepter le passage de plusieurs dimensions d'arbre de manoeuvre ou de noix d'arbre de manoeuvre. La pièce de retenue 439, 539a, dans sa partie sur laquelle repose l'empilement 43a à 43h, 53a à 53h, porte des ergots 4391, 5391 dirigés vers ledit empilement et répartis de façon à permettre un centrage de cet empilement pendant la phase de montage. Plus particulièrement, ces ergots coopèrent avec une forme extérieure de l'une 43h, 53h des plaquettes de l'empilement, par exemple avec la même découpe extérieure que celle 432a prévue pour l'accouplement du moyeu 22 en rotation.

Ces plaquettes, en tout ou partie, peuvent alors être maintenues entre elles par des moyens de serrage sur l'arbre de manoeuvre, par exemple un écrou 115 ou une vis 114 coopérant avec l'extrémité de cet arbre par dessus l'empilement.

La pièce de retenue peut être réalisée en même temps que le reste du dispositif de verrouillage et être adaptable à différentes formes ou dimensions de vannes, tandis que les plaquettes ou rondelles 43a à 43h ou 53a à 53h sont réalisées à la demande en fonction de la forme et dimension de la vanne à équiper.

Bien sûr, l'invention n'est pas limitée aux exemples qui viennent d'être décrits et de nombreux aménagements peuvent être apportés à ces exemples sans sortir du cadre de l'invention, comme définie par les revendications suivantes.

En particulier, d'autres procédures et systèmes de verrouillage peuvent mettre en oeuvre l'invention, tout en utilisant en leur sein des mécanismes de verrouillage différents des barillets mécaniques décrits ici.

## Revendications

1. Dispositif (2) de verrouillage de sécurité pour une vanne (1) de canalisation ce dispositif comprenant un corps (10) et un arbre de manoeuvre (11) commandant ladite vanne et
- des moyens d'accouplement en rotation dudit arbre de manoeuvre (11) avec un élément de manoeuvre (22) pouvant recevoir une pièce de manoeuvre (3), et
- une serrure accouplée en rotation avec le corps (10) de la vanne et comprenant au moins un mécanisme de verrouillage (25, 26) apte à interdire ou limiter la rotation dudit élément de manoeuvre (22),
**caractérisé en ce que** ledit dispositif de verrouillage comprend au moins un élément dit verrou (21) dont un déplacement depuis une position fonctionnelle vers une position hors fonction permet de désaccoupler l'élément de manoeuvre (22) d'avec l'arbre de manoeuvre (11) sans nécessiter de rotation dudit arbre de manoeuvre (11) ni de désaccoupler la pièce de manoeuvre (3) de l'élément de manoeuvre (22).

2. Dispositif selon la revendication 1, **caractérisé en ce que** l'élément de manoeuvre (22) est du type volant de manoeuvre.

3. Dispositif selon l'une des revendications 1 ou 2, **caractérisé en ce que** la vanne (1) de canalisation est du type multi-tours.

4. Dispositif selon l'une quelconque des revendications 1 à 3, **caractérisé en ce qu'**il comprend au moins deux mécanismes de verrouillage (25, 26) mécaniques à clé, interagissant entre eux pour réaliser une fonction d'interverrouillage entre au moins deux positions de l'arbre de manoeuvre (11).

5. Dispositif selon l'une des revendications 1 à 4, **caractérisé en ce que** l'élément de manoeuvre (22) et l'arbre de manoeuvre (11) sont réunis en translation par la présence de l'élément verrou (21), et sont accouplés en rotation par coopération de formes (223, 232 et 230, 113 ; ou 220, 112 FIGURE 10) autorisant entre eux une translation parallèle à leur axe de rotation.

6. Dispositif selon l'une des revendications 1 à 5, **caractérisé en ce que** l'élément de manoeuvre (22) est réuni en translation avec l'arbre de manoeuvre (11) par l'intermédiaire de la serrure (20), le dispositif de verrouillage comprenant des moyens d'ancrage réalisant, selon l'axe dudit arbre de manoeuvre :
- un ancrage (2010, 231) en translation de la serrure (20) avec l'arbre de manoeuvre (11), et
- un ancrage (204, 240) en rotation de la serrure (20) avec le corps de vanne (10) ;
lesdits ancrages en rotation et en translation étant commandés ensembles par l'élément verrou (21).

7. Dispositif selon la revendication 6, **caractérisé en ce que** les moyens d'ancrage en rotation de la serrure par rapport au corps (10) de vanne comprennent un élément d'ancrage (24) entourant l'arbre de manoeuvre (11) et reliant en rotation la serrure (20) au corps (10) de vanne par coopération de formes (240, 204 et 243, 103), lesdites formes étant agencées de façon ce que leur désengagement nécessite un éloignement de ladite serrure (20) devant être autorisé par l'élément verrou (21).

8. Dispositif selon l'une des revendications 1 à 7, **caractérisé en ce que** la serrure (20) comprend un boîtier traversé par un tunnel (202) entourant l'arbre de manoeuvre (11, 23) ou l'élément de manoeuvre (22) ou les deux, ledit tunnel pouvant être pénétré par une partie d'au moins un mécanisme de verrouillage (25, 26), ladite partie formant alors un pêne interagissant avec l'arbre de manoeuvre (11, 23) ou l'élément de manoeuvre (22) pour en interdire ou en limiter la rotation ;
l'élément verrou (21) comprenant au moins une partie (211, 212) coulissant transversalement par rapport à l'axe du tunnel (202) pour s'engager dans des fentes ou évidements portés d'une part (2010) par la serrure (20) et d'autre part (231 ou 111) par l'arbre de manoeuvre (23 ou 11).

9. Dispositif selon la revendication 8, **caractérisé en ce que** l'élément verrou (21) comprend une pièce formant une fourchette (211, 212) venant s'insérer dans la serrure (20), de part et d'autre de l'axe du tunnel (202), en s'engageant dans des fentes transversales (2010) portées par ledit tunnel et dans une rainure annulaire (111) partielle ou totale portée par l'arbre de manoeuvre (11), réunissant ainsi en translation la serrure (20) avec l'arbre de manoeuvre (11).

10. Dispositif selon l'une des revendications 1 à 8, **caractérisé en ce que** l'arbre de manoeuvre (11) porte un élément dit adaptateur (23), fixé à son extrémité et coopérant avec l'élément verrou (21) pour réunir en translation ledit arbre de manoeuvre avec le dispositif de verrouillage (2).

11. Dispositif selon la revendication 10, **caractérisé en ce que** l'élément verrou (21) comprend une pièce formant une fourchette (211, 212) venant s'insérer dans la serrure (20), de part et d'autre de l'axe du tunnel (202), en s'engageant dans des fentes transversales (2010) portées par ledit tunnel et dans une rainure annulaire (231) partielle ou totale portée par l'élément adaptateur (23), réunissant ainsi en translation la serrure (20) avec l'arbre de manoeuvre (11).

12. Dispositif selon l'une des revendications 6 à 11, **caractérisé en ce que** l'élément de manoeuvre (22) porte au moins un épaulement (221) coopérant avec une partie (27) de la serrure (20) pour retenir ledit élément de manoeuvre dans le tunnel (202) de ladite serrure.

13. Procédé de démontage d'un dispositif de verrouillage ou d'interverrouillage selon l'une des revendications 1 à 12, **caractérisé en ce qu'**il comprend les étapes de :
- déplacement de l'élément verrou de la position fonctionnelle à une position hors fonction, désaccouplant ainsi l'élément de manoeuvre (22) ou la serrure (20) d'avec l'arbre de manoeuvre (11, 23);
- désaccouplement en rotation de l'élément de manoeuvre (22) d'avec l'arbre de manoeuvre (11, 23) par séparation de l'élément de manoeuvre ou la serrure d'avec l'arbre de manoeuvre.

14. Procédé de montage d'un dispositif de verrouillage ou d'interverrouillage selon l'une des revendications 6 à 12, **caractérisé en ce qu'**il comprend les étapes de :
- montage de élément d'ancrage (24) autour de l'arbre de manoeuvre (11) et engagement de ses formes d'ancrage (243) avec celles (103) du corps (10) de vanne ;
- montage de la serrure (20) sur l'arbre de manoeuvre (11, 23), comprenant un accouplement de l'élément de manoeuvre (22) avec l'arbre de manoeuvre (11, 23) et un engagement des formes d'ancrage (204) de la serrure avec celles (240) de l'élément d'ancrage (24) ;
- déplacement de l'élément verrou (21) d'une position hors fonction à une position fonctionnelle, accouplant ainsi en translation l'élément de manoeuvre (22) avec l'arbre de manoeuvre (11, 23), et la serrure (20) le corps (10) de vanne.

## Claims

1. Safety locking device (2) for a pipe valve (1), this device comprising a body (10) and a stem (11) controlling said valve and
- means of coupling said stem (11) in rotation to an operating element (22) capable of receiving an operating member (3),
and
- a lock coupled in rotation to the body (10) of the valve and comprising at least one locking mechanism (25, 26) capable of preventing or limiting the rotation of said operating element (22),
**characterized in that** said locking device comprises at least one element socalled latch (21), the movement of which from an operational position to a non-operational position makes it possible to decouple the operating element (22) from the stem (11) without the need for rotating said stem (11) or decoupling the operating member (3) from the operating element (22).

2. Device according to claim 1, **characterized in that** the operating element (22) is of the hand wheel type.

3. Device according to one of claims 1 or 2, **characterized in that** the pipe valve (1) is of the multi-turn type.

4. Device according to any one of claims 1 to 3, **characterized in that** it comprises at least two key-operated mechanical locking mechanisms (25, 26), mutually interacting in order to perform an interlock function between at least two positions of the stem (11).

5. Device according to one of claims 1 to 4, **characterized in that** the operating element (22) and the stem (11) are connected in translation by the presence of the latch element (21), and are coupled in rotation by cooperating shapes (223, 232 and 230, 113; or 220, 112 FIGURE 10) allowing between them a translational movement parallel to their axis of rotation.

6. Device according to one of claims 1 to 5, **characterized in that** the operating element (22) is connected in translation to the stem (11) by means of the lock (20), the locking device comprising anchoring means performing, along the axis of said stem:
- the anchoring (2010, 231) of the lock (20) in translation to the stem (11), and
- the anchoring (204, 240) of the lock (20) in rotation to the valve body (10);
said rotational and translational anchoring being controlled together by the latch element (21).

7. Device according to claim 6, **characterized in that** the means of anchoring the lock in rotation with respect to the valve body (10) comprise an anchoring element (24) surrounding the stem (11) and connecting the lock (20) in rotation to the valve body (10) by cooperating shapes (240, 204 and 243, 103), said shapes being arranged so that their disengagement requires a moving away of said lock (20) that must be permitted by the latch element (21).

8. Device according to one of claims 1 to 7, **characterized in that** the lock (20) comprises a housing through which passes a tunnel (202) surrounding the stem (11, 23) or the operating element (22) or both, said tunnel being capable of being entered by at least part of a locking mechanism (25, 26), said part then forming a bolt interacting with the stem (11, 23) or the operating element (22) in order to prevent or limit the rotation thereof;
the latch element (21) comprising at least one part (211, 212) sliding transversally with respect to the axis of the tunnel (202) in order to engage in slots or recesses born on the one hand (2010) by the lock (20) and on the other hand (231 or 111) by the stem (23 or 11).

9. Device according to claim 8, **characterized in that** the latch element (21) comprises a portion forming a fork (211, 212) for insertion into the lock (20), on either side of the axis of the tunnel (202), by engaging in transverse slots (2010) born by said tunnel and in a partial or complete annular groove (111) born by the stem (11), thus connecting the lock (20) in translation to the stem (11).

10. Device according to one of claims 1 to 8, **characterized in that** the stem (11) bears an element known as an adaptor (23), fixed to its end and cooperating with the latch element (21) in order to connect said stem in translation to the locking device (2).

11. Device according to claim 10, **characterized in that** the latch element (21) comprises a portion forming a fork (211, 212) for insertion into the lock (20), on either side of the axis of the tunnel (202), by engaging in transverse slots (2010) born by said tunnel and in a partial or complete annular groove (231) born by the adaptor element (23), thus connecting the lock (20) in translation to the stem (11).

12. Device according to one of claims 6 to 11, **characterized in that** the operating element (22) bears at least one shoulder (221) cooperating with a part (27) of the lock (20) in order to hold said operating element in the tunnel (202) of said lock.

13. Method of removing a locking or interlocking device according to one of claims 1 to 12, **characterized in that** it comprises the steps of:
- moving the latch element from the operational position to a non-operational position, thus decoupling the operating element (22) or the lock (20) from the stem (11, 23);
- decoupling the operating element (22) in rotation from the stem (11, 23) by separating the operating element or the lock from the stem.

14. Method of assembling a locking or interlocking device according to one of claims 6 to 12, **characterized in that** it comprises the steps of:
- assembling the anchoring element (24) around the stem (11) and engaging its anchoring shapes (243) with those (103) of the valve body (10);
- assembling the lock (20) onto the stem (11, 23), comprising coupling the operating element (22) to the stem (11, 23) and engaging the anchoring shapes (204) of the lock with those (240) of the anchoring element (24);
- moving the latch element (21) from a non-operational position to an operational position, thus coupling in translation the operating element (22) to the stem (11, 23), and the lock (20) to the valve body (10).

## Patentansprüche

1. Vorrichtung (2) zur Sicherheitsverriegelung eines Kanalisierungsschiebers (1) umfassend einen Körper (10) und eine Betätigungswelle (11), welche den Schieber betätigt, und
- Mittel zur drehfesten Koppelung der Betätigungswelle (11) mit einem Betätigungselement (22), welches eine Betätigungsteil (3) aufnehmen kann, und
- einen Verschluss mit drehfester Koppelung mit der Körper (10) des Schiebers und umfassend wenigstens einen Verriegelungsmechanismus (25, 26) geeignet zur Unterbindung oder Einschränkung der Rotation des Betätigungselements (22),
**dadurch gekennzeichnet, dass** die Vorrichtung zur Verriegelung wenigstens ein Element genannt Riegelelement (21) umfasst, der durch eine Verschiebung von einer funktionalen Stellung in eine ausserbetriebliche Stellung ein Abkoppeln des Betätigungselements (22) von der Betätigungswelle (11) erlaubt, so dass weder eine Rotation der Betätigungswelle (11) notwendig ist noch ein Abkoppeln des Betätigungsteils (3) vom Betätigungselement (22).

2. Vorrichtung nach Anspruch 1, **dadurch gekennzeichnet, dass** das Betätigungselement (22) von dem Typ Schwungrad ist.

3. Vorrichtung nach einem der Ansprüche 1 oder 2, **dadurch gekennzeichnet, dass** der Kanalisationsschieber (1) von dem Typ Multi-Umdrehung ist.

4. Vorrichtung nach einem der Ansprüche 1 bis 3, **dadurch gekennzeichnet, dass** sie mindestens zwei Verriegelungsmechanismen (25, 26) umfasst, mechanisch mit Schlüssel verschliessbar, welche untereinander interagieren, um eine Funktion der Zwischenverriegelung zwischen mindestens zwei Stellungen der Betätigungswelle (11) zu erwirken.

5. Vorrichtung nach einem der Ansprüche 1 bis 4, **dadurch gekennzeichnet, dass** das Betätigungselement (22) und die Betätigungswelle (11) durch die Anwesenheit des Riegelelements (21) verschiebungsfest verbunden sind, und zueinander durch Eingriff der Bauformen (223, 232 und 230, 113; oder 220, 112 Fig. 10) drehfest verbunden sind, welche zwischen ihnen eine parallele Translation entlang ihrer Rotationsachse erlauben.

6. Vorrichtung nach einem der Ansprüche 1 bis 5, **dadurch gekennzeichnet, dass** das Betätigungselement (22) und die Betätigungswelle (11) durch die Vermittlung des Verschluss (20) verschiebungsfest verbunden sind, und dass die Vorrichtung zur Verriegelung Mittel zur Verankerung umfasst, welche entlang der Achse der Betätigungswelle:
- eine Verankerung (2010, 231) der Translation des Verschluss (20) gegenüber der Betätigungswelle (11), und
- eine Verankerung (204, 240) der Drehung des Verschluss (20) gegenüber dem Körper des Schiebers (10) bewirken;
wobei die genannten Verankerungen der Drehung und der Translation zusammen durch das Riegelelement (21) betätigt sind.

7. Vorrichtung nach Anspruch 6, **dadurch gekennzeichnet, dass** die Mittel zur Verankerung der Drehung des Verschluss in Bezug auf den Körper (10) des Schiebers ein Verankerungselement (24) umfassen, welches die Betätigungswelle (11) umschliesst und den Verschluss (20) mit dem Körper (10) des Schiebers durch Eingreifen der Bauformen (240, 204 und 243, 103) drehfesten verbindet, wobei die gesagten Bauformen derart angeordnet sind, dass deren Loslösen eine Wegführen des genannten Verschluss (20) benötigt, welche durch das Riegelelement (21) erlaubt sein soll.

8. Vorrichtung nach einem der Ansprüche 1 bis 7, **dadurch gekennzeichnet, dass** der Verschluss ein durch einen Tunnel (202) durchdrungenes Gehäuse umfasst, welcher die Betätigungswelle (11, 23) oder das Betätigungselement (22) oder beide umschliesst, wobei der Tunnel durch eine Abschnitt des wenigstens einen Verriegelungsmechanismus (25, 26) durchdrungen sein kann, wobei der Abschnitt einen Riegel formt, welcher mit der Betätigungswelle (11, 23) oder dem Betätigungselement (22) interagiert, um **dadurch** die Rotation zu unterbinden oder zu verringern; wobei das Riegelelement (21) mindestens einen Abschnitt (211, 212) umfasst, welcher quer in Bezug auf die Achse des Tunnel (202) gleitet, um in Schlitzen oder Aussparungen einzugreifen, welche einerseits (2010) durch den Verschluss (20) und andererseits (231 oder 111) durch die Betätigungswelle (23 oder 11) getragen sind.

9. Vorrichtung nach Anspruch 8, **dadurch gekennzeichnet, dass** das Riegelelement (21) ein gabelförmiges Teil (211, 212) umfasst, welches in den Verschluss (20) auf beiden Seiten der Achse des Tunnels (202) einschiebbar ist, indem es in Querschlitze (2010), welche durch den Tunnel getragen sind, und in eine ringförmige teilweise oder ganze Nut, welche durch die Betätigungswelle (11) getragen ist, eingreift, und welches auf diese Weise den Verschluss (20) mit der Betätigungswelle (11) verschiebungsfest verbindet.

10. Vorrichtung nach einem der Ansprüche 1 bis 8, **dadurch gekennzeichnet, dass** die Betätigungswelle (11) ein an ihrem Ende fixiertes Element genannt Adapter (23) aufweist, welcher mit dem Riegelelement (21) zusammenwirkt, um auf diese Weise die Betätigungswelle relativ zu der Vorrichtung zur Verriegelung (2) verschiebungsfest zu verbinden.

11. Vorrichtung nach Anspruch 10, **dadurch gekennzeichnet, dass** das Riegelelement (21) ein gabelförmiges Teil (211, 212) umfasst, welches in den Verschluss (20) auf beiden Seiten der Achse des Tunnels (202) einschiebbar ist, indem es in Querschlitze (2010), welche durch den Tunnel getragen sind, und in eine ringförmige teilweise oder ganze Nut, welche durch den Adapter (23) getragen ist, eingreift, und welches auf diese Weise den Verschluss (20) mit der Betätigungswelle (11) verschiebungsfest verbindet.

12. Vorrichtung nach einem der Ansprüche 6 bis 11, **dadurch gekennzeichnet, dass** das Betätigungselement (22) wenigstens eine Schulter (221) aufweist, welche mit einem Abschnitt (27) des Verschluss (20) zusammenwirkt, um das Betätigungselement im Tunnel (202) des genannten Verschluss festzuhalten.

13. Verfahren zur Demontage einer Vorrichtung zur Verriegelung oder zur Zwischenverriegelung nach einem der Ansprüche 1 bis 12, **dadurch gekennzeichnet, dass** es die folgende Schritte umfasst:
- Verschieben des Riegelelements aus der funktionalen Stellung in eine ausserbetriebliche Stellung, um **dadurch** das Betätigungselement (22) oder den Verschluss (20) von der Betätigungswelle (11, 23) zu entkoppeln;
- Entkoppeln der Rotation des Betätigungselements (22) von der Betätigungswelle (11,23) durch Trennung des Betätigungselements oder des Verschluss von der Betätigungswelle.

14. Verfahren zur Montage einer Vorrichtung zur Verriegelung oder zur Zwischenverriegelung nach einem der Ansprüche 6 bis 12, **dadurch gekennzeichnet, dass** es folgende Schritte umfasst:
- Montieren des Verankerungselements (24) um die Betätigungswelle (11) herum und Eingreifen seiner Verankerungsformen (243) mit denen (103) des Körpers (10) des Schiebers;
- Montieren des Verschluss (20) auf der Betätigungswelle (11, 23), umfassend ein Koppeln des Betätigungselements (22) mit der Betätigungswelle (11, 23) und ein Eingreifen der Verankerungsformen (204) des Verschluss mit denen (240) des Verankerungselements (24);
- Verschieben des Riegelelements (21) aus einer ausserbetrieblichen Stellung in eine funktionale Stellung, um **dadurch** das Betätigungselement (22) mit der Betätigungswelle (21, 23) und des Verschluss (20) mit der Körper (10) des Schiebers verschiebungsfest zu verbinden.
